# EUROPEAN PATENT APPLICATION

(11) **EP 4 336 280 A2**
(43) Date of publication of application: **13.03.2024**
(21) Application number: 23196050.1
(22) Date of filing: 07.09.2023
(51) Int. Cl.: G05B 15/02, G06N 20/00, G06Q 50/10, H04W 64/00

(54) **METHOD AND DATA PROCESSING SYSTEM FOR ENVIRONMENT EVALUATION**

(30) Priority: 08.09.2022 CN 202211095875
(71) Applicant: Carrier Corporation, Palm Beach Gardens, FL 33418 (US)
(72) Inventor: CHAI, Kheh Chew, 608926 Teban Gardens Crescent (SG); YIP, Mann Fai, 608926 Teban Gardens Crescent (SG); ZHOU, Dan, Shanghai, 201206 (CN); WANG, Xiaohua, Shanghai, 201206 (CN); ZHENG, Yiting, Shanghai, 201206 (CN); PETERSON, Eric C, Palm Beach Gardens, 33418 (US); MAKWINSKI, Mark, Palm Beach Gardens., 33418 (US)
(74) Representative: Dehns

(57) **Abstract**

The present application relates to the Internet of Things (IoT) technologies, and in particular, to a method and a data processing system (110) for environment evaluation, and a computer-readable storage medium (520) with a computer program (540) for executing the aforementioned method stored thereon. A data processing system (110) according to one aspect of the present application comprises: at least one processor (530); at least one memory (520); and a computer program (540) stored on the memory and executable on the processor, wherein execution of the computer program on the processor results in the following operations: obtaining (201) user evaluations of an environment (Ω1) and environmental parameter measurements (Ω1) from a plurality of mobile devices (130A, 130B); and generating (202) evaluation information about the environment from the user evaluations and the environmental parameter measurements.

## Description

### TECHNICAL FIELD

The present application relates to a method and a data processing system for environment evaluation, and a computer-readable storage medium with a computer program for executing the aforementioned method stored thereon.

### BACKGROUND

A Building Management System (BMS) is a data processing system installed in a building for controlling and monitoring mechanical and electrical equipment such as Heating Ventilation and Air Conditioning systems (HVAC systems), lighting systems, electrical systems, fire protection systems, safety systems, and the like, to ensure the monitoring and efficient management of energy and occupant comfort, thereby reducing the energy comsumption of the building while providing a good environment.

Efficient and good-quality building management relies heavily on an accurate evaluation of the environment, which requires various sensors to be deployed inside the building. However, as the number of sensors increases, deployment costs and system complexity increase dramatically. This challenge is especially acute for large and very large buildings.

### SUMMARY

According to a first aspect, there is provided a method for environment evaluation, comprising the steps of:
obtaining user evaluations of an environment and environmental parameter measurements from a plurality of mobile devices; and
generating evaluation information about the environment from the user evaluations and the environmental parameter measurements.

Optionally, the mobile devices may include at least one of: a terminal device with a human-machine interface, a terminal device with one or more built-in sensors, and a terminal device with a human-machine interface and one or more built-in sensors.

Optionally, the user evaluations may be in the form of natural language or in a prescribed data format.

Optionally, the environmental parameter measurements may include one or more of: temperature, humidity, illuminance, sound intensity, substance concentration and particle concentration.

Optionally, the user evaluations and the environmental parameter measurements may have at least one of a location tag and a time tag.

Optionally, the evaluation information may be generated using a machine learning model, wherein the machine learning model may be trained using historical data of the user evaluations and the environmental parameter measurements.

Optionally, the execution of the computer program on the processor may further result in the following operation: intercalibrating the sensors of the mobile devices using a plurality of the environmental parameter measurements.

Optionally, the execution of the computer program on the processor may further result in the following operation: executing a cross-check based on the user evaluations and the environmental parameter measurements.

Optionally, the execution of the computer program on the processor may further result in the following operation: executing a data spoofing detection based on the location tag contained in the user evaluations and the environmental parameter measurements.

Optionally, the evaluation information may comprise one or more of: current air quality level, predicted value of air quality level, estimated value of space crowdedness and correlation between the user evaluations and the environmental parameter measurements.

According to a second aspect, there is provided a data processing system, which comprises:
at least one processor;
at least one memory; and
a computer program stored on the memory and executable on the processor, wherein execution of the computer program on the processor results in the operation of the method described in the first aspect.
The data processing system may comprise any of the features discussed in connection with the first aspect above.

According to a third aspect, there is provided a computer-readable storage medium with a computer program adapted to be executed on a processor of a terminal device stored thereon, wherein execution of the computer program results in execution of the steps of the method as described in the first aspect.

### BRIEF DESCRIPTION OF THE DRAWINGS

Certain exemplary embodiments will now be described in greater detail by way of example only and with reference to the accompanying drawings in which:
FIG. 1 is a schematic diagram of the generation and application of environmental evaluation information.
FIG. 2 is a flowchart of a method for environment evaluation.
FIG. 3 is a flowchart of a process of generating environmental evaluation information.
FIG. 4 is a flowchart of a method for environment evaluating.
FIG. 5 is a schematic block diagram of a data processing system.
FIG. 6 is a schematic block diagram of another data processing system.

### DETAILED DESCRIPTION

The present application is described in greater detail below with reference to the accompanying drawings of the illustrative embodiments of the present application. However, the present application may be implemented in different forms and should not be construed as being limited to the embodiments given herein. The aforementioned embodiments are given so that the disclosure of the present application will be comprehensive and complete, so as to more fully convey the protection scope of the present application to those skilled in the art.

In this specification, terms such as "comprise" and "include" indicate that in addition to including the units and steps that are directly and explicitly stated in the description and claims, the technical solutions of the present application do not exclude the scenario that other units and steps that are not directly or explicitly stated are also included.

Unless otherwise specified, terms such as "first" and "second" do not denote the order of the elements in terms of time, space, size, etc., but are merely used to distinguish each element.

In the present application, the term "mobile device(s)" refers to a variety of devices with mobile capabilities, which includes at least one of: terminal devices with a human-machine interface (such as mobile phones, tablet computers, wearable devices, portable computers, etc.), terminal devices with one or more built-in sensors (such as portable gas detectors, portable thermohygrometers, decibel meters, portable light intensity meters, hand-held particle detectors, etc.), and terminal devices with a human-machine interface and one or more built-in sensors (such as mobile phones equipped with an infrared temperature sensor, etc.).

In the present application, the term "environmental data" refers to data used to describe the state of the environment in a specific area. The specific area mentioned here includes an indoor area and an outdoor area. Types of environmental data include environmental parameter measurements such as, but not limited to, temperature, humidity, illuminance, sound intensity, substance concentrations (such as carbon monoxide concentration, carbon dioxide concentration, volatile organic compound (VOC) concentration, formaldehyde concentration, bacterial concentration, virus concentration, etc.), particle concentration (such as PMI 2.5), etc.), user's evaluation or feeling of the environment, and the like.

According to one aspect of the present application, environmental data for environment evaluation may be obtained from mobile devices, the environmental data including user evaluations of the environment and environmental parameter measurements obtained from the mobile devices. The large number and wide distribution of mobile devices are beneficial for reducing the cost of data acquisition and improving the accuracy of environment evaluation. In addition, by using both measurement data and user evaluations, it is possible to generate environmental evaluation information that reflects the characteristics of a specific user group (e.g., users in a certain region, users in a certain age group, etc.), which helps to provide users with customized services to improve user experience.

In other embodiments, environmental parameter measurements and user evaluations of the environment include at least one of a location tag and a time tag. Location tag and time tag can be respectively used to describe where and when environmental data is acquired. With the help of location tag, environmental data can be associated with certain locations indoors or outdoors where stationary sensors may not be deployed. However, this deficiency can be compensated for by means of environmental data provided by mobile devices. Furthermore, after the introduction of time tag, more implicit and potentially valuable laws or trends can be found from the environmental data, which is beneficial to the realization of intelligent management of the environment.

In still other embodiments, when a plurality of environmental parameter measurements of the same type with similar location tag and similar time tag are acquired, these measurements can be used to intercalibrate the sensors of the mobile devices or to find the abnormality of the sensors.

In still other embodiments, cross-check may be performed based on user evaluations and environmental parameter measurements. For example, when temperature and humidity measurements at a certain location and users' environmental evaluation for that location are received from one or more mobile devices, if the two are poorly matched (e.g., the measured temperature is 39 °C while the user evaluation is appropriate), it can be judged that an abnormal condition has occurred.

In still other embodiments, anti-spoofing detection may be performed based on a location tag contained in the user evaluations and environmental parameter measurements. For example, if the user's location at the time of making an evaluation or uploading a measurement (as determined from the mobile device's positioning data, for example) does not match the location tag, or if the mobile device's motion trajectory (as determined from the mobile device's positioning data, for example) does not contain the location indicated by the location tag, it can be judged that the user evaluation and measurement are false.

Various evaluation information can be generated based on user evaluations and environmental parameter measurements. Evaluation information includes, but is not limited to, for example, current air quality level, predicted value of air quality level, estimated value of space crowdedness (e.g., based on carbon dioxide concentration level and change in the user's location), and correlation between user evaluations and environmental parameter measurements (e.g., the relationships between temperature range, humidity range and the user's psychological feelings) and so on.

In still other embodiments, machine learning models (e.g., deep neural network model) are utilized to generate various evaluation information. To this end, historical data of user evaluations and environmental parameter measurements obtained from mobile devices can be utilized to train the machine learning models.

The environmental data can be acquired in the following manner: first, the application running on the mobile terminal is used to prompt the user to participate in the sharing of the environmental data. Exemplarily, the link of the application (such as a QR code link) can be arranged at the entrance of a building or an outdoor area for the user to scan the code to install the application, or the background server can actively push the installation information of the application to the user's mobile device. When the above application is installed and running on the user's mobile device, the user may be prompted to confirm his consent to sharing the environmental data.

After obtaining the user's authorization to share environmental data, running of the application can cause the mobile device to automatically transmit environmental data to the data processing system, which may be, for example, a cloud computing platform (server cluster) or a single server system for generating environmental evaluation information. It should be noted that "transmit" here includes the data transmission via the communication link established directly between the two, and also includes the data transmission completed with the help of other devices (for example, the mobile device uploads the environmental data via the mobile communication network provided by the telecommunication operator to the cloud computing platform).

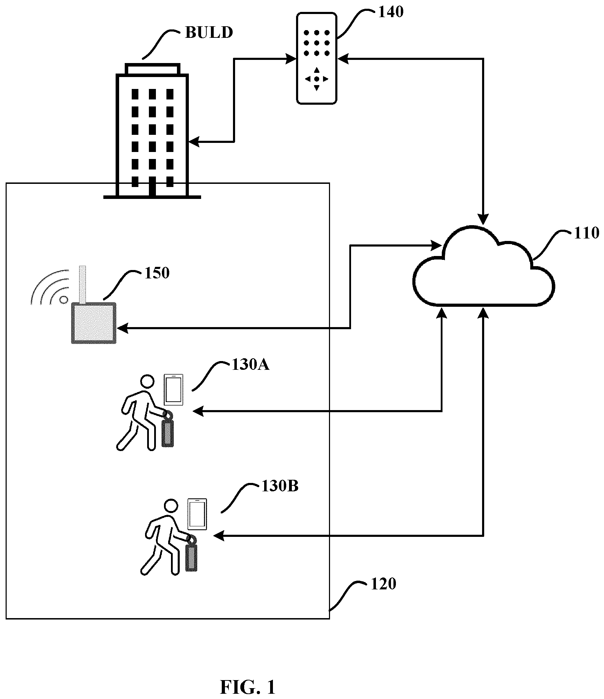

FIG. 1 is a schematic diagram of the generation and application of environmental evaluation information according to some embodiments of the present application.

Referring to FIG. 1, data processing system 110 receives user evaluations of the environment and environmental parameter measurements from a plurality of mobile devices 130A and 130B located in area 120. By way of example, it is assumed that area 120 is the interior of a building BULD, mobile device 130A is a mobile phone, and mobile device 130B is a portable device with one or more built-in sensors. It should be understood that the number of mobile devices shown here is only exemplary, and in practical applications, the number of mobile devices may be much larger than that shown in FIG. 1.

In some embodiments, data processing system 110 may be a cloud computing platform or server cluster. In other embodiments, data processing system 110 may also be implemented as a stand-alone system or a single server.

With continued reference to FIG. 1, data processing system 110 may generate evaluation information of the environment of area 120 based on environmental data (including user evaluations and environmental parameter measurements) received from the mobile devices. The environmental data and the generated evaluation information may include one or more of the features described above to meet various application needs. Taking the scenario shown in FIG. 1 as an example, the generated evaluation information may be the correlation between user evaluations and environmental parameter measurements, which is output to building management system 140. Accordingly, building management system 140 can generate control commands for building equipment (e.g., building A's HVAC system, lighting system, electrical system, etc.) based on this correlation to provide users with a comfortable environment inside the building. Still taking the scenario shown in FIG. 1 as an example, the generated evaluation information may be the current air quality level, the predicted value of air quality level, the estimated value of space crowdedness, etc. of area 120, which is pushed to the mobile devices 130A and 130B. In addition, the generated evaluation information can also be pushed to all users who subscribe to the environment evaluation information, regardless of whether they provide environmental data or not.

According to another aspect, stationary sensors 150 (e.g., temperature sensors, humidity sensors, illuminance sensors, concentration sensors, sound pressure sensors, particle counters, etc.) disposed at various locations inside the building A can transmit sensed environmental data to data processing system 110 either periodically, or in response to a data acquisition request. Optionally, environmental data sensed by stationary sensors 150 may be transmitted to building management system 140.

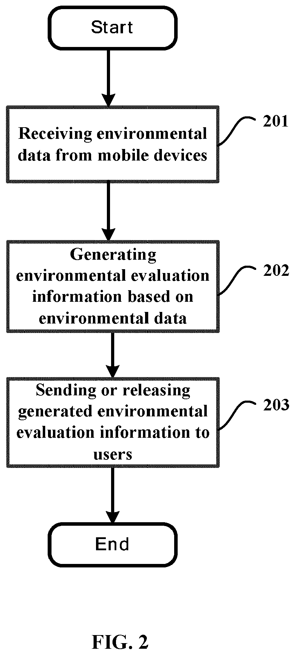

FIG. 2 is a flowchart of a method for environment evaluation according to some embodiments of the present application. Exemplarily, the method described below takes the scenario shown in FIG. 1 as an example.

The method for environment evaluation shown in FIG. 2 begins at step 201. In this step, data processing system 110 receives environmental data Ω1 (exemplarily assumed to be user evaluations) and Ω2 (exemplarily assumed to be environmental parameter measurements) about area 120 from mobile devices 130A and 130B, respectively.

User evaluations of the environment of area 120 may be in the form of natural language, such as natural language text directly input by the user on the mobile device (e.g., "it's too cold here", "it's very stuffy", etc.).

User evaluations may also be in the form of in a prescribed data format, for example, evaluation items for selection by the user may be presented on the display interface of the application. Exemplarily, the set evaluation items include, for example, "comfort", "dry", "stuffy", "cool", "gloomy and cold", "cold", and the like.

When area 120 (e.g., interior of a building) is divided into N sub-areas, the environmental data Ω1 and Ω2 may contain N subsets or data sets, each subset containing users' environment evaluations of the corresponding sub-area or the environmental parameter measurements in the corresponding sub-area.

Then enter step 202. In this step, data processing system 110 generates environmental evaluation information based on the environmental data Ω1 and Ω2. For the cases where environmental data is based on sub-areas, the environmental evaluations can be refined into sub-areas.

In some embodiments, corresponding machine learning models (e.g., deep neural network model) are used to generate evaluation information based on different data processing tasks. Specifically, multiple machine learning models trained by using historical values of environmental data may be provided in advance in data processing system 110. The application requirements include, but are not limited to, evaluation of space crowdedness, evaluation of ambient air quality, trend prediction of ambient air quality, analysis of the correlation between user evaluations and environmental parameter measurements, data spoofing detection, sensor calibration, cross-check of user locations, and the like.

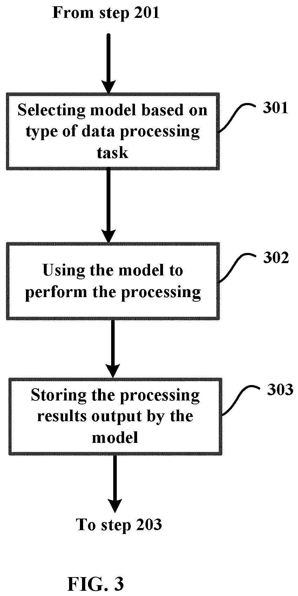

FIG. 3 is a flowchart of a process of generating environmental evaluation information according to some embodiments of the present application, and the process may be used to implement step 202 in FIG. 2.

The process shown in FIG. 3 includes:
Step 301: Based on the type of data processing task, select one or more models from the model library MB composed of machine learning models VTM1, VTM2 ...VTMn.
Step 302: Use the selected machine learning model(s) to process the input environmental data. It should be noted that for multiple selected machine learning models, they can run in parallel or in series.
Step 303: Store the processing result or evaluation information output by the called machine learning model(s).

After step 202, the method shown in FIG. 2 proceeds to step 203. In this step, data processing system 110 sends or releases the generated environmental evaluation information to the users. In one example, the generated evaluation information is a correlation between user evaluations and environmental parameter measurements, and accordingly, the evaluation information will be sent to building management system 140, causing the latter to generate control commands for the building equipment. In another example, the evaluation information may be the current air quality level, the predicted value of air quality level, the estimated value of space crowdedness, etc. of the entire area 120 or sub-areas, which will be pushed via the mobile communication network provided by the telecommunication operator to the subscribers.

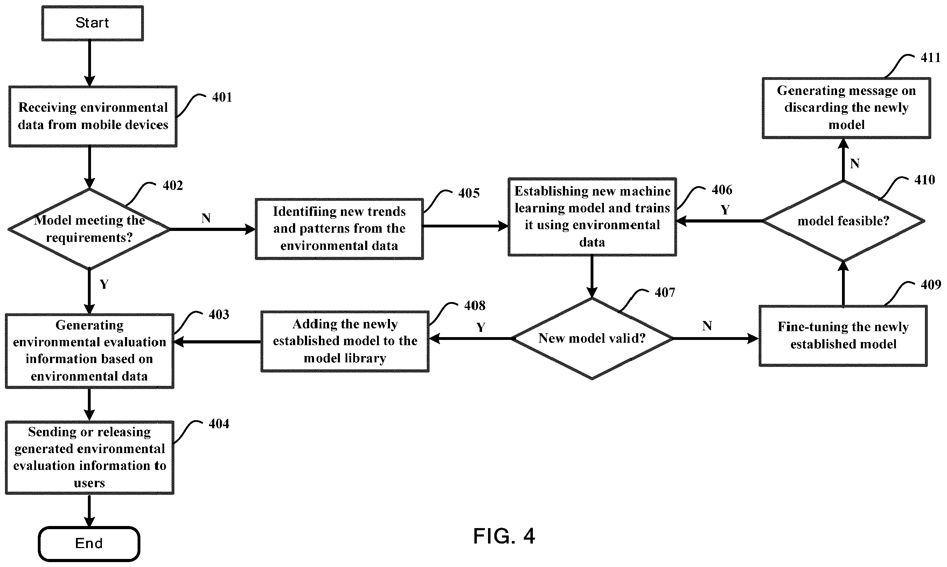

FIG. 4 is a flowchart of a method for environment evaluation according to some embodiments of the present application. Exemplarily, the method described below still takes the scenario shown in FIG. 1 as an example, and it is assumed that data processing system 110 has modeling capabilities.

The method shown in FIG. 4 begins with step 401. In this step, data processing system 110 receives environmental data Ω1 and Ω2 about area 120 from mobile devices 130A and 130B, respectively. Similarly, when area 120 is divided into N sub-areas, environmental data Ω1 and Ω2 may contain N subsets or data sets, each subset containing user evaluations or environmental parameter measurements for the corresponding sub-area.

Then enter step 402. In this step, data processing system 110 determines whether the existing machine learning model(s) in the model library MB can meet the requirements of the processing task, and if so, it goes to step 403, otherwise it goes to step 405 to start the modeling sub-process.

In step 403, data processing system 110 generates environmental evaluation information based on environmental data Ω1 and Ω2. And, in step 404, data processing system 110 transmits or releases the generated environmental evaluation information to the users. Steps 403 and 404 can be implemented in a manner similar to the embodiments shown in FIGS. 2 and 3, and details are not repeated here.

The modeling sub-process is further described below.

In step 405, data processing system 110 identifies new trends and patterns from the environmental data, for example, using tools such as data mining.

Then enter step 406. In this step, data processing system 110 establishes a new machine learning model and trains it using the environmental data.

After step 406, the modeling sub-process proceeds to step 407. In this step, data processing subsystem 110 determines whether the established machine learning model is valid (e.g., using a new learning sample to test the validity of the model). If it is valid, it proceeds to step 408 to add the new model to the model library MB and return to step 403 to use the newly established machine learning model to process the environmental data; if it is invalid, it proceeds to step 409.

In step 409, the newly established machine learning model is fine-tuned.

After step 409, the modeling sub-process proceeds to step 410. In this step, data processing subsystem 110 determines whether the fine-tuned machine learning model is feasible (e.g., whether there are sufficient computing resources or data volume to meet the modeling requirements). If it is feasible, it returns to step 406 to use the environmental data for training; otherwise, it goes to step 411 to generate a message of discarding the newly established machine learning model.

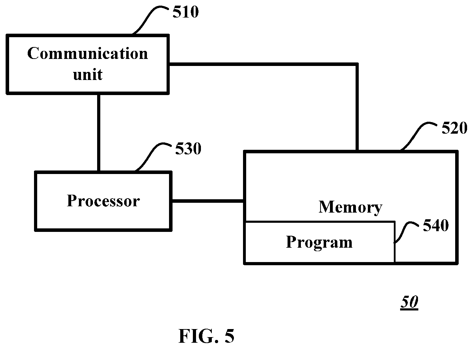

FIG. 5 is a schematic block diagram of a data processing system. The data processing system 50 shown in FIG. 5 may be used to implement the data processing system of FIG. 1. It includes communication unit 510, memory 520 (e.g., non-volatile memory such as flash memory, ROM, hard drive, magnetic disk, optical disk, etc.), processor 530 and computer program 540.

Communication unit 510 serves as a communication interface and is configured to establish a communication connection between the data processing system and an external device (e.g., a sensor, a mobile device) or a network (e.g., the Internet).

Memory 520 stores computer program 540 executable by the processor 530. In addition, memory 520 may also store environmental data sent by stationary sensors and mobile devices.

Processor 530 is configured to run the computer program 540 stored on the memory 520 and to access data on the memory 520 (e.g., obtaining environmental data, saving environmental evaluation information, etc.).

Computer program 540 may include computer instructions for implementing the method for environment evaluation described above with reference to FIGS. 1 to 4, so that the corresponding method can be implemented when the computer program 540 runs on the processor 530.

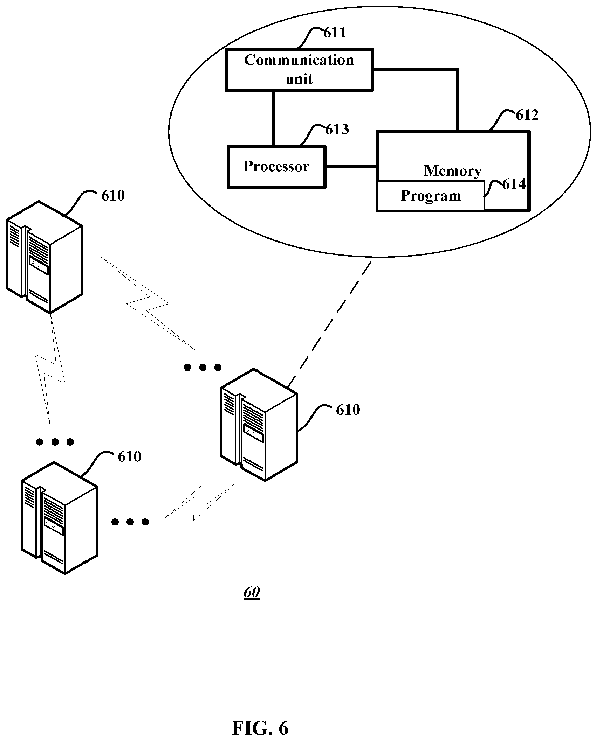

FIG. 6 is a schematic block diagram of another data processing system. Data processing system 60 shown in FIG. 6 can be used to implement the data processing system in FIG. 1. It includes a plurality of servers 610, which forms a server cluster. These servers establish communication connections with each other and with user devices or clients via a network (e.g., the Internet). Exemplarily, each server may have the structure shown in FIG. 5. Specifically, each server 610 includes a communication unit 611, a memory 612, a processor 613 and a computer program 614.

The resources of the server can be divided into hardware resources and software resources. The hardware resources include, for example, memory and processors, and the software resources include operating systems, application software, integrated development environment, and the like. In the data processing system shown in FIG. 6, various types of resources on the server are provided in the form of resource pools for completing various data processing tasks. In particular, in the data processing system shown in FIG. 6, the method for environment evaluation shown with reference to FIGS. 1 to 4 may be implemented by the memory and processors on different servers in cooperation.

According to another aspect of the present application, a computer-readable storage medium with a computer program stored thereon is further provided, wherein, when the program is executed by a processor, one or more steps included in the method described above with reference to FIGS. 1 to 4 can be implemented.

Computer-readable storage mediums referred to in the present application include various types of computer storage mediums, which can be any available mediums that can be accessed by a general-purpose or special-purpose computer. Computer-readable storage mediums may include, for example, RAM, ROM, EPROM, E2PROM, registers, hard disks, removable disks, CD-ROM or other optical disk storage, magnetic disk storage or other magnetic storage devices, or any other transitory or non-transitory mediums that can be used to carry or store desired program code elements in the form of instructions or data structures and can be accessed by a general-purpose or special-purpose computer, or a general-purpose or special-purpose processor. Combinations of the above should also be included within the protection scope of computer-readable storage mediums. An exemplary storage medium is coupled to the processor, such that the processor can read and write information from/to the storage medium. In an alternative solution, the storage medium may be integrated into the processor. The processor and storage medium may reside in the Application Specific Integrated Circuit (ASIC). The ASIC may reside in the user terminal. In an alternative solution, the processor and storage medium may reside in the user terminal as discrete components.

Those skilled in the art would appreciate that the various illustrative logical blocks, modules, circuits, and algorithm steps described herein can be implemented as electronic hardware, computer software, or combinations of the two.

To demonstrate the interchangeability of hardware and software, various illustrative components, blocks, modules, circuits, and steps have been described above generally in terms of their functionality. Whether such functionality is implemented in the form of hardware or software depends on the particular application and the design constraints imposed on the overall system. Those skilled in the art may implement the described functionality in varying ways for a particular application. However, such implementation decisions should not be interpreted as causing a departure from the scope of the present application.

Although only some of the specific embodiments of the present application have been described, those skilled in the art shall appreciate that the present application may, without departing from the scope of the claims, be implemented in many other forms. Accordingly, the examples and embodiments shown are to be regarded as illustrative but not restrictive, and the present application may cover various modifications and replacements without departing from the scope of the invention as defined by the appended claims.

The embodiments and examples presented herein are provided to best illustrate the embodiments in accordance with the technology and its particular applications, and to thereby enable those skilled in the art to implement and utilize the present application. However, those skilled in the art would appreciate that the above description and examples are provided for the convenience of illustration and example only. The description set forth herein is not intended to cover every aspect of the application or to limit the application to the precise form disclosed.

The following clauses set out aspects of the present disclosure which may not be presently claimed but which may form basis for future amendments and/or a divisional application.
1. A data processing system, comprising:
   at least one processor;
   at least one memory; and
   a computer program stored on the memory and executable on the processor, wherein execution of the computer program on the processor results in the following operations:
      obtaining user evaluations of an environment and environmental parameter measurements from a plurality of mobile devices; and
      generating evaluation information about the environment from the user evaluations and the environmental parameter measurements.
2. The data processing system according to clause 1, wherein the mobile device comprises at least one of: a terminal device with a human-machine interface, a terminal device with one or more built-in sensors, and a terminal device with a human-machine interface and one or more built-in sensors.
3. The data processing system according to clause 1, wherein the user evaluations are in the form of natural language or in a prescribed data format.
4. The data processing system according to clause 1, wherein the environmental parameter measurements include one or more of: temperature, humidity, illuminance, sound intensity, substance concentration, and particle concentration.
5. The data processing system according to clause 1, wherein the user evaluations and the environmental parameter measurements have at least one of a location tag and a time tag.
6. The data processing system according to clause 1, wherein the evaluation information is generated using a machine learning model, and wherein the machine learning model is trained using historical data of the user evaluations and the environmental parameter measurements.
7. The data processing system according to clause 1, wherein execution of the computer program on the processor further results in the following operation:
   intercalibrating sensors of the mobile devices using a plurality of the environmental parameter measurements.
8. The data processing system according to clause 5, wherein execution of the computer program on the processor further results in in the following operation:
   executing a cross-check based on the user evaluations and the environmental parameter measurements.
9. The data processing system according to clause 5, wherein execution of the computer program on the processor further results in in the following operation:
   executing a data spoofing detection based on the location tag contained in the user evaluations and the environmental parameter measurements.
10. The data processing system according to any of clauses 1 to 9, wherein the evaluation information is one or more of: current air quality level, predicted value of air quality level, estimate value of space crowdedness and correlation between the user evaluations and the environmental parameter measurements.
11. A method for environment evaluation, comprising the steps of:
   obtaining user evaluations of an environment and environmental parameter measurements from a plurality of mobile devices; and
   generating evaluation information about the environment from the user evaluations and the environmental parameter measurements.
12. The method according to clause 11, wherein the mobile device comprises at least one of: a terminal device with a human-machine interface, a terminal device with one or more built-in sensors, and a terminal device with a human-machine interface and one or more built-in sensors.
13. The method according to clause 11, wherein the user evaluations are in the form of natural language or in a prescribed data format.
14. The method according to clause 11, wherein the environmental parameter measurements include one or more of: temperature, humidity, illuminance, sound intensity, substance concentration, and particle concentration.
15. The method according to clause 11, wherein the user evaluations and the environmental parameter measurements have at least one of a location tag and a time tag.
16. The method according to clause 11, wherein the evaluation information is generated using a machine learning model, and wherein the machine learning model is trained using historical data of the user evaluations and the environmental parameter measurements.
17. The method according to clause 11, further comprising:
   intercalibrating sensors of the mobile devices using a plurality of the environmental parameter measurements.
18. The method according to clause 15, further comprising the step of:
   executing a cross-check based on the user evaluations and the environmental parameter measurements.
19. The method according to clause 15, further comprising the step of:
   executing a data spoofing detection based on the location tag contained in the user evaluations and the environmental parameter measurements.
20. The method according to any of clauses 11 to 19, wherein the evaluation information is one or more of: current air quality level, predicted value of air quality level, estimated value of space crowdedness and correlation between the user evaluations and the environmental parameter measurements.
21. A computer-readable storage medium with instructions stored thereon, wherein when the instructions are executed by a processor, the processor is configured to execute the method according to any of clauses 11 to 19.

## Claims

1. A method for environment evaluation, comprising the steps of:
obtaining (201) user evaluations of an environment (Ω1) and environmental parameter measurements (Ω2) from a plurality of mobile devices (130A, 130B); and
generating (202) evaluation information about the environment from the user evaluations and the environmental parameter measurements.

2. The method according to claim 1, wherein the mobile device (130A, 130B) comprises at least one of: a terminal device with a human-machine interface, a terminal device with one or more built-in sensors, and a terminal device with a human-machine interface and one or more built-in sensors.

3. The method according to claim 1 or 2, wherein the user evaluations (Ω1) are in the form of natural language or in a prescribed data format.

4. The method according to claim 1, 2 or 3, wherein the environmental parameter measurements (Ω2) include one or more of: temperature, humidity, illuminance, sound intensity, substance concentration, and particle concentration.

5. The method according to any preceding claim, wherein the user evaluations (Ω1) and the environmental parameter measurements (Ω2) have at least one of a location tag and a time tag.

6. The method according to any preceding claim, wherein the evaluation information is generated using a machine learning model, and wherein the machine learning model is trained using historical data of the user evaluations and the environmental parameter measurements.

7. The method according to any preceding claim, further comprising:
intercalibrating sensors of the mobile devices (130A, 130B) using a plurality of the environmental parameter measurements (Ω2).

8. The method according to claim 5, further comprising the step of:
executing a cross-check based on the user evaluations (Ω1) and the environmental parameter measurements (Ω2).

9. The method according to claim 5, further comprising the step of:
executing a data spoofing detection based on the location tag contained in the user evaluations (Ω1) and the environmental parameter measurements (Ω2).

10. The method according to any preceding claim, wherein the evaluation information is one or more of: current air quality level, predicted value of air quality level, estimated value of space crowdedness and correlation between the user evaluations and the environmental parameter measurements.

11. A data processing system (110), comprising:
at least one processor (530);
at least one memory (520); and
a computer program (540) stored on the memory (520) and executable on the processor, wherein execution of the computer program on the processor results in the operation of the method according to any preceding claim.

12. A computer-readable storage medium with instructions stored thereon, wherein when the instructions are executed by a processor (530), the processor is configured to execute the method according to any of claims 1 to 10.
